# EUROPÄISCHE PATENTANMELDUNG

(11) **EP 0 936 063 A2**
(43) Veröffentlichungstag der Anmeldung: **18.08.1999**
(21) Anmeldenummer: 99102350.8
(22) Anmeldetag: 06.02.1999
(51) Int. Cl.: B32B 27/40, E04B 1/76

(54) **Wärmedämmendes Verbundbauelement**

(30) Priorität: 10.02.1998 DE 29802056 U
(71) Anmelder: PUREN-SCHAUMSTOFF GMBH, 88662 Überlingen (DE)
(72) Erfinder: Bommer, Hans, Dipl. Kfm., 88662 Überlingen (DE)
(74) Vertreter: Patentanwälte Westphal, Mussgnug & Partner

(57) **Zusammenfassung**

Wärmedämmendes Verbundelement, bestehend aus wenigstens drei Schichten, die unlösbar miteinander verklebt sind, wobei eine verhältnismäig dicke mittlere Schicht (14) eine Rohdichte < 50 kg/m³ und die verhältnismäßig dünnen äußeren Schichten (16) eine Rohdichte >500 kg/m³ besitzen, daß das Verbundbauelement eine Wärmeleitfähigkeit von <0,08 W/K·m und eine Gesamtdicke <32 cm aufweist.

## Beschreibung

Die Erfindung betrifft ein wärmedämmendes Verbundbauelement nach dem Oberbegriff des Anspruchs 1.

Für sogenannte Passivhäuser oder Nullenergiehäuser, die sich dadurch auszeichnen, daß sie einen außergewöhnlich geringen oder keinen Heizwärmebedarf haben, sind zahlreiche Bauelemente bekannt, die sich durch Material und Aufbau voneinander unterscheiden. Der spezifische Heizwärmebedarf solcher Häuser soll unter 15 kWh/(m²a) liegen und einen Gesamt-Primärenergiekennwert <120 kWh/(m²a) aufweisen. Um dies zu erreichen, muß die Gebäudehülle aus konstruktiv tragenden Bauelementen bestehen, die gleichzeitig hochwärmedämmend sind.

Bekannt sind zu diesem Zweck beispielsweise wärmedämmende Verbundplatten großer Dicke, die auf Ziegel- oder Kunststein-Mauerwerk aufgebracht und mit diesem verbunden werden. Die Gesamtdicke solcher Aufbauten beträgt in der Regel ca. 45 bis 50 cm.

Bei anderen bekannten Außenwandaufbauten werden vorgefertigte Dämmelemente aus Holz und einem Wärmedämmstoff der Wärmeleitgruppe WLG 040 an massive Tragkonstruktionen in sogenannter Schottenbauweise angehängt. Die erforderlichen Dicken liegen ebenfalls im Bereich von 45 - 50 cm.

Besonders für den Selbstbau werden Betonschalungssteine aus Polystryrol verwendet, mit denen Neubauwände geschoßweise errichtet und anschließend mit Beton verfüllt werden. Solche Schalungssteine mit wärmedämmenden Außenschalen der Wärmeleitgruppe WLG 050 - 045 werden auch für freistehende Einfamilienhäuser eingesetzt. Ihre Dicke beträgt ebenfalls 45 - 50 cm.

Bereits für Niedrigenergiehäuser verwendete Holztafelelemente bieten sich ebenfalls für Passivhäuser an. Je höher jedoch die Anforderung an den Wärmeschutz ist, desto störender wird der den Wärmedurchgangswiderstand schwächende Holzanteil. Bei für Passivhäuser erforderlichen Dämmdicken wird außerdem der Vollholzträger teurer und die Konstruktion sehr schwer. Auch hier beträgt die erforderliche Dicke 45 - 50 cm.

Allen beschriebenen und derzeit üblichen Bauweisen ist gemeinsam, daß sie auf Bauelemente mit großen Dicken angewiesen sind. Große Dicken sind aber platzraubend, erschweren das Anbringen von Anschlüssen und beschneiden die Spielräume für eine architektonische Gestaltung.

Ziel der Erfindung ist daher die Schaffung von für Passivhäuser geeigneten wärmedämmenden Verbundbauelementen, die bei einer wesentliche verringerten Gesamtdicke eine kleine Wärmeleitfähigkeit und ein geringes Gewicht besitzen und trotzdem den statischen Anforderungen solcher Bauelemente entsprechen.

Diese Aufgabe wird bei einem eingangs genannten Verbundbauelement erfindungsgemäß durch die kennzeichnenden Merkmale des Anspruchs 1 gelöst.

Dieses erfindungsgemäße Verbundbauelement kann für Passivhäuser sowohl als Bauelement für die Außenwand als auch für das Dach und den Boden verwendet werden. Es werden die Nachteile besonders dicker Aufbauten vermieden, die Bauzeiten lassen sich verkürzen und insgesamt die Baukosten reduzieren. Das erfindungsgemäße Bauelement ist aufgrund der Materialkombination auch voll recyclierbar. Es ist feuchtigkeitsresistent, schraubbar und verrottungsfest, und es kann gestrichen, tapeziert oder verputzt werden.

Die Unteransprüche sind auf vorteilhafte Ausgestaltungen des erfindungsgemäßen Verbundbauelements gerichtet, wobei insbesondere in den Ansprüchen 2 und 3 besonders vorteilhafte Materialkombinationen für das erfindungsgemäße Verbundbauelement angegeben sind.

Anhand der Figuren wird ein bevorzugtes Ausführungsbeispiel der Erfindung näher erläutert. Es zeigt:
- Figur 1: eine Aufsicht auf ein eine Fenstertür enthaltendes Bauelement und
- Figur 2: einen Schnitt längs der Linie II-II in Fig.1.

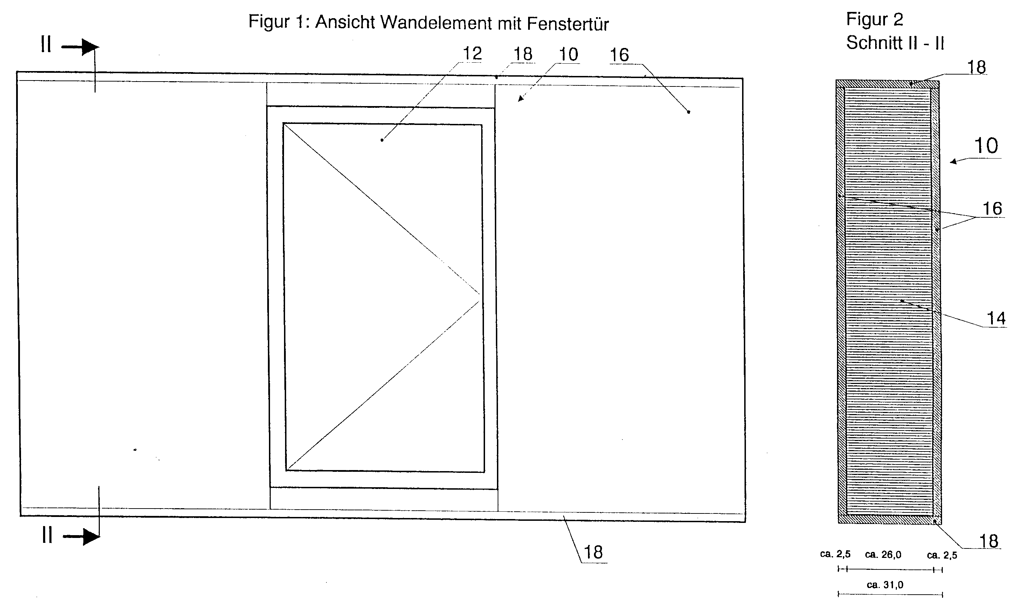

Das in den Figuren gezeigte rechteckige Verbundbauelement 10 enthält eine mittig angeordnete Fenstertür 12 und ist in Fig.1 von außen zu sehen.

Es besteht gemäß Fig.2 aus einer etwa 26 cm dicken mittleren Schicht 14 aus Polyurethan-Hartschaum der Wärmeleitgruppe WLG 030 und zwei äußeren oder Deckschichten 16 mit einer Dicke von je etwa 2,5 cm aus recycliertem Polyurethan-Werkstoff, welcher aus Polyurethan-Granulat in Verbindung mit einem Bindemittel durch Pressen und ggfs. unter Einfluß einer Wärmebehandlung hergestellt ist und eine Dichte zwischen 500 kg/m³ und 900 kg/m³ sowie eine geringe Wärmeleitfähigkeit von etwa 0,07 W/(K·m) aufweist. Die äußeren Schichten 16 sind mit der mittleren Schicht 14 unlösbar verklebt. Auch die Stirnflächen des mittleren Elements 14 sind mit Abdeckleisten 18 unlösbar verklebt, die aus dem gleichen Material bestehen wie die äußeren Schichten 16.

## Patentansprüche

1. Wärmedämmendes Verbundbauelement, bestehend aus wenigstens drei Schichten, die unlösbar miteinander verklebt sind, dadurch gekennzeichnet, daß eine verhältnismäßig dicke mittlere Schicht (14) eine Rohdichte <50 kg/m³ und die verhältnismäßig dünnen äußeren Schichten (16) eine Rohdichte >500 kg/m³ besitzen, daß das Verbundbauelement eine Wärmeleitfähigkeit von <0,08 W/K·m und eine Gesamtdicke <32 cm aufweist.

2. Verbundbauelement nach Anspruch 1, dadurch gekennzeichnet, daß die mittlere Schicht (14) aus einem Konstruktionsdämmstoff der Wärmeleitgruppe WLG 030 und die äußeren Schichten aus einem mindestens 25 mm dicken harten Polyurethan-Werkstoff bestehen.

3. Verbundbauelement nach Anspruch 1 oder 2, dadurch gekennzeichnet, daß die mittlere Schicht (14) aus geschäumten Polyurethan und die äusseren Schichten (16) aus einem recyclierten Polyurethan-Werkstoff bestehen, welcher aus Polyurethan-Granulat in Verbindung mit Bindemittel durch Pressen und ggfs. Wärmebehandlung gefertigt ist, eine Dichte von 500 - 900 kg/m³ sowie eine geringe Wärmeleitfähigkeit von etwa 0,07 W/K·m aufweist.

4. Verbundbauelement nach einem der vorangehenden Ansprüche, dadurch gekennzeichnet, daß die Dicke der äußeren Schichten (16) etwa 10% der Dicke der mittleren Schicht (14) beträgt.

5. Verbundbauelement nach einem der vorangehenden Ansprüche, dadurch gekennzeichnet, daß die Schichten (14,16) wahlweise anorganische und/oder organische Füllstoffe enthalten.

6. Verbundbauelement nach einem der vorangehenden Ansprüche, dadurch gekennzeichnet, daß es eine oder mehrere zusätzliche Schichten zur Erhöhung des Schall- und/oder Wärmeschutzes aufweist.

7. Verbundbauelement nach einem der vorangehenden Ansprüche, dadurch gekennzeichnet, daß es zusätzlich innen und/oder außen je eine Oberflächenschicht aus Holz, Metall, Steinzeug oder Kunststoff besitzt.

8. Verbundbauelement nach einem der vorangehenden Ansprüche, dadurch gekennzeichnet, daß es schraubbar, streich- und lackierbar sowie verputzbar ist.
